# EUROPEAN PATENT SPECIFICATION

(11) **EP 1 403 301 B1**
(45) Date of publication and mention of the grant of the patent: **07.06.2006**
(21) Application number: 03020536.3
(22) Date of filing: 17.09.2003
(51) Int. Cl.: C08G 18/48, C08G 65/26, C08G 18/42

(54) **Processes for preparing ethylene oxide-capped polyols**
Verfahren zur Herstellung von Polyolen welche Ethylenoxidendgruppen enthalten
Procédé pour la préparation de polyols ayant des groupes terminaux à partir d'oxyde d'éthylène

(30) Priority: 30.09.2002 US 260498
(43) Date of publication of application: 31.03.2004
(73) Proprietor: Bayer MaterialScience AG, 51368 Leverkusen (DE); Bayer MaterialScience LLC, Pittsburgh, PA 15205-9741 (US)
(72) Inventor: Ehlers, Stephan, Dr., 50937 Köln (DE); Pazos, Jose F., Charleston WV 25304 (US); Steinlein, Christian, Dr., 40822 Ratingen (DE); Schneider, Michael, Dr., 51519 Odenthal (DE); Hofmann, Jörg, Dr., 47829 Krefeld (DE); Keyvani, Majid, Glen Mills PA 19342 (US); Hayes, John E., Gibsonia PA 15044 (US)

(56) References cited:
- EP-A- 0 750 001
- EP-A- 0 807 651
- EP-A- 1 022 300
- US-A- 5 235 114
- US-A- 5 605 939
- US-A- 6 066 683

## Description

### TECHNICAL FIELD OF THE INVENTION

The present invention is directed to a process for preparing ethylene oxide ("EO")-capped polyols which involves combining a double-metal cyanide ("DMC")-catalyzed polyol with a basic catalyst. The present invention is also directed to a process for preparing EO-capped polyols which involves combining a DMC-catalyzed polyol with a base-catalyzed polyol. The present invention is also directed to a process for preparing EO-capped polyols in which removal of catalyst residues or salts formed by the neutralization of the basic catalyst is not required. The polyols produced by the processes of the present invention have a relatively high content of primary hydroxyl groups.

### BACKGROUND OF THE INVENTION

EO-capped polyols are valuable in the polyurethane industry because the primary hydroxyl groups of EO-capped polyols react favorably with polyisocyanates. EO-capped polyols are typically produced by a two step process. First, propylene oxide ("PO") (or a mixture of PO and EO) is polymerized in the presence of a basic catalyst (usually potassium hydroxide ("KOH")) to produce a polyol containing mostly secondary hydroxyl groups. Second, EO is added to the catalyst containing mixture to convert some or most of the secondary hydroxyl groups to primary hydroxyl groups. This process uses the same catalyst (usually KOH) for both propoxylation and ethoxylation. After the addition of EO is completed, the basic catalyst is either neutralized with an acid and the precipitated salt is separated from the polyol by filtration or centrifugation, or the basic catalyst is removed with an ion exchanger, coalescer, absorbent or any of the other techniques known in the art to produce a polyol having a pH-value of about 7.

DMC catalysts can be used to produce polyether, polyester and polyetherester polyols which are used to produce polyurethane coatings, elastomers, sealants, foams, and adhesives. DMC catalysts such as zinc hexacyanocobaltate offer many advantages in the production of polyether polyols. For example, DMC catalysts can be used to produce polyether polyols which have low unsaturation levels compared to polyether polyols produced by basic (KOH) catalysis.

The advantages of using low unsaturation polyols in the production of polyurethanes are described in the following disclosures: EP 0 876 416; United States Patent No. 5,700,847; and WO 99/51657.

Improvements in DMC catalyst technology have resulted in catalysts with increased activity for epoxide polymerization. *See*, for example, United States Patent Nos. 5,470,813; 5,482,908; 5,545,601; and 5,714,428.

Despite the many advantages of using DMC catalysts in the production of polyols, one important drawback remains, i.e., DMC catalysts cannot be used to directly produce EO-capped polyols. EO cannot be added to "cap" an oxypropylene polyol prepared by DMC catalysis, as is done in KOH catalysis. When EO is added to a polyoxypropylene polyol produced by DMC catalysis, the resulting product is a heterogeneous mixture of: (1) un-reacted polyoxypropylene polyol; and (2) highly ethoxylated polyoxypropylene polyol and/or polyethylene oxide. As a result, the product is hazy and, at times, solid at room temperature.

Several different processes have been described to overcome this drawback. These processes involve preparing an EO-capped polyol from a DMC-catalyzed polyol with "re-catalysis". Re-catalysis involves preparing an oxypropylene polyol by DMC catalysis, adding a basic catalyst to the DMC-catalyzed oxypropylene polyol and then adding EO to "cap" the polyol.

For example, United States Patent No. 4,355,188 discloses a process which involves capping a DMC-catalyzed polyol with EO while the polyol is in contact with a strong base. The strong base, together with the DMC catalyst, is removed from the polyol after EO capping is complete. The "work-up" of this polyol includes neutralization of the strong base with a strong acid, for example sulfuric or phosphoric acid, as well as separation of the precipitated salt by filtration or centrifugation. If the precipitated salt is allowed to remain in the polyol, blockages in foaming equipment will result. Additionally, precipitated salts which remain in the polyol can adversely impact the physical properties of the polyol.

Another method for removing DMC catalysts from polyols after EO-capping is complete is with the use of ion exchangers. *See* Kirk-Othmer, *Encyclopedia Of Chemical Technology,* 2^{nd} Ed., Vol. 11, 1966, Interscience Publishers, New York, pages 871 to 899. However, the use of ion exchangers adds an additional processing step, and, as a result, increases manufacturing costs. Thus, using an ion exchanger to EO-cap a polyol produced by DMC catalysis does not offer an advantage over conventional basic (KOH) catalysis.

Japanese Kokai H5-25267 discloses a process in which re-catalysis is carried out with an aqueous solution of KOH. Following the addition of an aqueous solution of KOH, but before the addition of a certain amount of monoepoxide having 3 or more carbons, water is removed to a certain level. EO is added to convert secondary hydroxyl groups to primary hydroxyl groups. However, in order to remove the added catalyst, work-up of the polyol is necessary after EO-capping.

United States Patent No. 5,144,093 discloses a process in which a DMC catalyst residue-containing polyol is reacted with an oxidant to cause the catalyst residue to form insoluble residues and then separating the insoluble residues from the polyol to produce a polyol which is essentially free of DMC catalyst residues. The insoluble residues are separated from the polyol before it is treated with a base to provide a base-treated polyol which is then reacted with EO to produce an EO-capped polyol.

A process for preparing EO-capped polyols from DMC-catalyzed polyols without using re-catalysis is disclosed in United States Patent No. 5,563,221 ("the '221 patent"). The '221 patent discloses a first polyol prepared with a DMC catalyst blended with a second polyol prepared with a basic catalyst, in which the basic catalyst is present in an amount from 0.05 wt. % to about 2 wt. %, based on the total weight of the polyol blend. The polyol blend is reacted with EO to produce an EO-capped polyol. The basic catalyst is present in a concentration which allows for deactivation the DMC catalyst as well for catalyzing ethoxylation of the polyol blend. Following ethoxylation, however, the EO-capped polyol is purified to remove catalyst residues.

United States Patent No. 4,110,268 ("the'268 patent") discloses neutralizing, with dodecylbenzene sulfonic acid ("DDBSA"), a polyether polyol prepared by basic catalysis. This neutralization step results in the reduction of or elimination of purification procedures. The '268 patent, however, is directed to producing polyether polyols by basic catalysis, without using "extraneous" catalysts. The '268 patent also discloses that even when "extraneous" catalysts are required in the polyol foam formulation, "very substantially" reduced amounts of the "extraneous" catalysts are used.

It is therefore desirable to develop a process for preparing EO-capped polyols which involves combining a DMC-catalyzed polyol with a basic catalyst. It is also desirable to develop a process for preparing EO-capped polyols which involves combining a DMC-catalyzed polyol with a base-catalyzed polyol. It is furthermore desirable to develop a process for preparing EO-capped polyols in which removal of catalyst residues or salts formed by the neutralization of the basic catalyst is not required.

### SUMMARY OF THE INVENTION

The present invention relates to a process for preparing EO-capped polyols which involves combining a DMC-catalyzed polyol with a basic catalyst. The present invention also relates to a process for preparing EO-capped polyols which involves combining a DMC-catalyzed polyol with a base-catalyzed polyol. The present invention further relates to a process for preparing EO-capped polyols in which removal of catalyst residues or salts formed by the neutralization of the basic catalyst is not required.

### BRIEF DESCRIPTION OF THE DRAWING

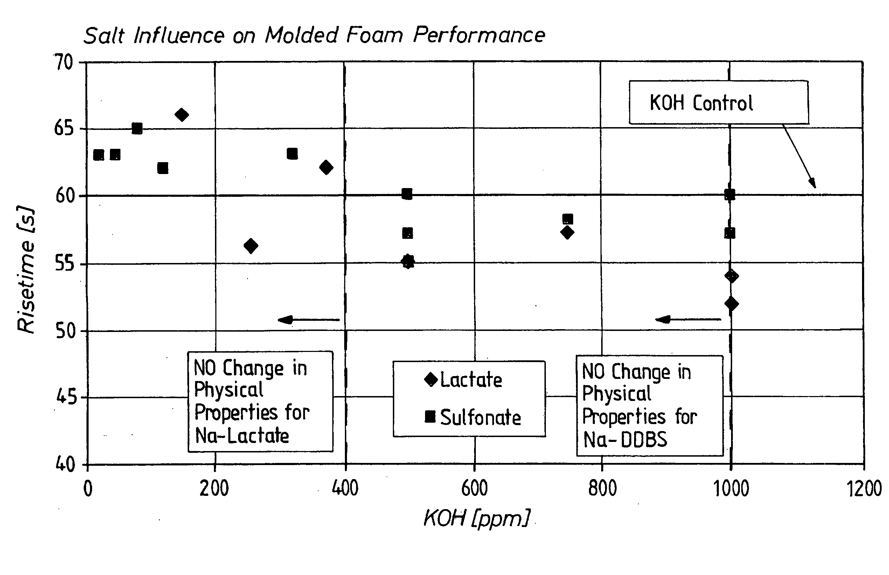

FIG. 1 plots the effect of spiking sodium lactate and sodium dodecyl benzene sulphonate in a conventional polyol/MDI foam formulation.

### DESCRIPTION OF THE INVENTION

In one embodiment of the present invention, EO-capped polyols are prepared by: a) providing a polyol which has been produced in the presence of a DMC catalyst; b) adding a basic catalyst to the DMC-catalyzed polyol to form a mixture comprising less than 0.05 wt.%, based on the total weight of the mixture, of the basic catalyst; and c) ethoxylating the mixture at a temperature of from about 130°C to about 220°C to produce an EO-capped polyol.

In another embodiment of the present invention, EO-capped polyols are prepared by: a) providing a polyol which has been produced in the presence of a DMC catalyst; b) adding a basic catalyst to the DMC-catalyzed polyol to form a mixture comprising less than 0.05 wt.%, based on the total weight of the mixture, of the basic catalyst; c) ethoxylating the mixture at a temperature of from about 130°C to about 220°C to produce an EO-capped polyol; and d) adding acid to the EO-capped polyol, with the proviso that no precipitate is formed by the reaction of the acid with the basic catalyst.

In yet another embodiment of the invention, EO-capped polyols are prepared by: a) providing a polyol which has been produced in the presence of a DMC catalyst; b) adding to the DMC-catalyzed polyol a polyol which has been prepared in the presence of a basic catalyst to form a mixture comprising from about 0.1 to about 10 wt.%, based on the total weight of the mixture, of the base-catalyzed polyol and less than 0.05 wt.%, based on the total weight of the mixture, of the basic catalyst; and c) ethoxylating the mixture at a temperature of from about 130°C to about 220°C to produce an EO-capped polyol.

In another embodiment of the invention, EO-capped polyols are prepared by: a) providing a polyol which has been produced in the presence of a DMC catalyst; b) adding to the DMC-catalyzed polyol a polyol which has been prepared in the presence of a basic catalyst to form a mixture comprising from about 0.1 to about 10 wt.%, based on the total weight of the mixture, of the base-catalyzed polyol and less than less than 0.05 wt.%, based on the total weight of the mixture, of the basic catalyst; c) ethoxylating the mixture at a temperature of from about 130°C to about 220°C to produce an EO-capped polyol; and d) adding acid to the EO-capped polyol, with the proviso that no precipitate is formed by the reaction of the acid with the basic catalyst.

In another embodiment of the invention, EO-capped polyols are prepared by: a) providing a polyol which has been produced in the presence of a DMC catalyst; b) adding to the DMC-catalyzed polyol a polyol which has been prepared in the presence of a basic catalyst to form a mixture comprising from about 1.0 to about 50 wt.%, based on the total weight of the mixture, of base-catalyzed polyol and from about 0.05 to about 0.5 wt.%, based on the total weight of the mixture, of the basic catalyst; c) ethoxylating the mixture at a temperature of from about 130°C to about 220°C to produce an EO-capped polyol; and d) adding acid to the EO-capped polyol, with the proviso that no precipitate is formed by the reaction of the acid with the basic catalyst.

In another embodiment of the invention, EO-capped polyols are prepared by: a) providing a polyol which has been produced in the presence of a DMC catalyst; b) adding to the DMC-catalyzed polyol a polyol which has been prepared in the presence of a basic catalyst to form a mixture comprising from about 1.0 to about 50 wt.%, based on the total weight of the mixture, of base-catalyzed polyol and from about 0.05 to about 0.5 wt.%, based on the total weight of the mixture, of the basic catalyst; and c) ethoxylating the mixture at a temperature of from about 130°C to about 220°C to produce an EO-capped polyol.

Generally, any known DMC catalysts can be used in the present invention. Suitable DMC catalysts are known and are described in, for example, United States Patent Nos. 3,427,256; 3,427,335; 3,829,505; 4,477,589; 5,158,922; and 5,470,813. Zinc hexacyanocobaltate catalysts are preferably used in the present invention.

DMC-catalyzed polyols of the present invention are any polyols produced by DMC catalysis. DMC-catalyzed polyols useful in the present invention are those which are prepared by any known method, such as, for example, reacting a heterocyclic monomer (usually an epoxide) with an active hydrogen-containing initiator (typically a low molecular weight polyol) in the presence of a DMC catalyst. Suitable heterocyclic monomers, active hydrogen-containing initiators and methods for making polyols using DMC catalysis are described in, for example, United States Patent Nos. 3,829,505; 3,941,849; 4,355,188; 4,472,560; and 5,482,908, as well as in EP-A 700 949.

Preferred DMC-catalyzed polyols of the present invention include polyoxypropylene polyols. The EO content of DMC-catalyzed polyols of the present invention is typically from about 1 to about 25 wt. %, preferably, from about 3 to about 20 wt. %, and, more preferably, from about 5 to about 15 wt. %, based on the total weight of the DMC-catalyzed polyol.

DMC-catalyzed polyols of the present invention can comprises a random EO/PO co-polymer building block comprising EO and PO in a weight ratio of EO/PO in the range of from about 1:99 to about 95:5 or a polyoxypropylene interior building block and an exterior random EO/PO co-polymer building block comprising EO and PO in a weight ratio of EO/PO in the range of from about 1:99 to about 95:5.

DMC-catalyzed polyols of the present invention can be produced by alkoxylation of a hydroxyfunctional starter with a mixture of EO and PO. The EO concentration in the EO/PO mixture can be increased during alkoxylation as the molecular weight of the polyol increases. The EO concentration is increased either "step-wise" or continuously.

DMC-catalyzed polyols of the invention have nominal functionalities of from 2 to 8, more preferably, from 2 to 3; hydroxyl numbers of from about 5 to about 500 mg KOH/g, more preferably, from about 10 to about 100 mg KOH/g; number average molecular weights of from about 200 to about 25,000 Da, more preferably, from about 500 to about 10,000 Da; and low levels of unsaturation, i.e., less than about 0.04 meq/g, preferably, less than about 0.02 meq/g, and, more preferably, less than about 0.01 meq/g.

Base-catalyzed polyols of the present invention are any polyols produced by basic catalysis. Base-catalyzed polyols useful in the present invention include polyoxypropylene polyols. Base-catalyzed polyols of the present invention can comprise random co-polymers of PO and EO. The total EO content of base-catalyzed polyols of the present invention, before EO-capping, is typically in the range of from about 0 to about 35 wt.%, based on the total weight of the base-catalyzed polyol. Base-catalyzed polyols are either produced in the presence of a basic catalyst or by re-catalyzing a DMC-catalyzed polyol with a basic catalyst.

Base-catalyzed polyols of the present invention preferably have nominal functionalities of from 2 to 8, more preferably, from 2 to 3; hydroxyl numbers of from about 20 to about 1,800 mg KOH/g, more preferably, from about 30 to about 500 mg KOH/g; number average molecular weights of from about 76 to about 8,000 Da, more preferably, from about 500 to about 6,000 Da.

Any basic or alkaline catalysts can be used which de-activates the DMC catalyst and which catalyzes the reaction between EO and polyol. Examples of suitable basic catalysts useful in the present invention include alkali and/or alkaline earth metals, solid alkali and/or alkaline earth hydroxides, alkoxides, hydrides and amines. Sodium and potassium hydroxide are preferred.

Phase transfer catalysts can be used in the present invention in combination with basic or alkaline catalysts in order to increase the reaction rate of the basic catalyst. Cyclic polyols such as crown ethers or cryptates are preferred phase transfer catalysts. Crown ethers and quaternary amine salts are also useful as phase transfer catalysts.

As mentioned above, alkoxides can be used in the invention as basic catalysts. Methoxides are preferred. Alkoxides can be prepared either prior to the addition to the polyol, or *in situ* by adding an alkali and/or alkaline earth metal and an alcohol to the polyol.

In one embodiment of the present invention, a basic catalyst is added to a DMC-catalyzed polyol to form a mixture which is then ethoxylated.

In this embodiment, the concentration of basic catalyst in the mixture, prior to ethoxylation, is less than 0.05 wt. %, preferably from about 0.001 to about 0.05 wt. %, more preferably, from about 0.01 to about 0.05 wt.%, based on the total weight of the mixture.

Prior to reacting the mixture with EO, traces of water are preferably removed from the mixture to prevent carbowax formation. "Carbowax" is defined as high molecular weight by-product in the ethoxylated polyol. Using gel permeation chromatography ("GPC") analysis of the ethoxylated polyol, carbowax can be identified by the presence of a second peak at molecular weights higher than the molecular weight of the ethoxylated polyol.

Ethoxylation of the mixture is typically performed by heating the mixture to a desired reaction temperature and incrementally adding EO. A reaction temperature of from about 130 to about 220°C, preferably from about 140 to about 200°C, more preferably, from about 150 to about 180°C, is used in the invention.

Typically, the total EO content of the EO-capped polyol is from about 5 to about 35 wt. %, based on the total weight of the EO-capped polyol. After EO-capping is complete, the reaction mixture is either kept at the same temperature that was used for ethoxylation or at a higher temperature in order to complete polymerization.

EO-capped polyols produced by the process of this embodiment of the invention are typically purified to remove catalyst residues. Any suitable means of purifying EO-capped polyols can be used, including treatment with an ion-exchange resin, water washing or treatment with an absorbent such as magnesium silicate. Suitable methods for purifying EO-capped polyols are described in, for example, United States Patent Nos. 3,715,402; 3,823,145; 4,721,818; 4,355,188 and 5,563,221.

In another embodiment of the invention, a base-catalyzed polyol is added to a DMC-catalyzed polyol to form a mixture which is then ethoxylated.

The concentration of base-catalyzed polyol in the mixture is from about 0.1 to about 10 wt.%, preferably from about 0.5 to about 10 wt. %, based on the total weight of the mixture. The concentration of basic catalyst in the mixture, prior to ethoxylation, is less than 0.05 wt.%, preferably from about 0.001 to about 0.05 wt.%, more preferably, from about 0.01 to about 0.05 wt.%, based on the total weight of the mixture.

Preferably, the DMC-catalyzed polyol and the base-catalyzed polyol have the same structure.

Prior to reacting the mixture with EO, traces of water are preferably removed from the mixture to prevent carbowax formation.

Ethoxylation of the mixture is typically performed by heating the mixture to a desired reaction temperature and incrementally adding EO. A reaction temperature of from about 130 to about 220°C, preferably from about 140 to about 200°C, more preferably, from about 150 to about 180°C, is used in the invention.

Typically, the total EO content of the EO-capped polyol is from about 5 to about 35 wt. %, based on the total weight of the EO-capped polyol. After EO-capping is complete, the reaction mixture is kept at the same temperature that was used for ethoxylation or at a higher temperature in order to complete polymerization.

EO-capped polyols produced by the process of this embodiment of the invention are typically purified to remove catalyst residues. Any suitable means of purifying EO-capped polyols can be used, including treatment with an ion-exchange resin, water washing or treatment with an absorbent such as magnesium silicate. Suitable methods for purifying EO-capped polyols are described in, for example, United States Patent Nos. 3,715,402; 3,823,145; 4,721,818; 4,355,188 and 5,563,221.

In another embodiment of the invention, a base-catalyzed polyol is added to a DMC-catalyzed polyol to form a mixture which is then ethoxylated.

The concentration of base-catalyzed polyol in the mixture is from about 1.0 to about 50 wt.%, preferably from about 1.0 to about 10 wt. %, based on the total weight of the mixture. The concentration of basic catalyst in the mixture, prior to ethoxylation, is from about 0.05 to about 0.5 wt.%, preferably from about 0.05 to about 0.3 wt.%, based on the total weight of the mixture.

Preferably, the DMC-catalyzed polyol and the base-catalyzed polyol have the same structure.

Prior to reacting the mixture with EO, traces of water are preferably removed from the mixture to prevent carbowax formation.

Ethoxylation of the mixture is typically performed by heating the mixture to a desired reaction temperature and incrementally adding EO. A reaction temperature of from about 130 to about 220°C, preferably from about 140 to about 200°C, more preferably, from about 150 to about 180°C, is used in the invention.

Typically, the total EO content of the EO-capped polyol is from about 5 to about 35 wt. %, based on the total weight of the EO-capped polyol. After EO-capping is complete, the reaction mixture is kept at the same temperature that was used for ethoxylation or at a higher temperature in order to complete polymerization.

EO-capped polyols produced by the process of this embodiment of the invention are typically purified to remove catalyst residues. Any suitable means of purifying EO-capped polyols can be used, including treatment with an ion-exchange resin, water washing or treatment with an absorbent such as magnesium silicate. Suitable methods for purifying EO-capped polyols are described in, for example, United States Patent Nos. 3,715,402; 3,823,145; 4,721,818; 4,355,188 and 5,563,221.

In another embodiment of the invention, acid is added to EO-capped polyols which are produced from a mixture of a DMC-catalyzed polyol and a basic catalyst in order to neutralize the basic catalyst. In this embodiment, a basic catalyst is added to a DMC-catalyzed polyol to form a mixture.

The concentration of basic catalyst in the mixture, prior to ethoxylation, is less than 0.05 wt. %, preferably from about 0.001 to about 0.05 wt. %, more preferably, from about 0.01 to about 0.05 wt.%, based on the total weight of the mixture.

Prior to reacting the mixture with EO, traces of water are preferably removed from the mixture to prevent carbowax formation.

Ethoxylation of the mixture is typically performed by heating the mixture to a desired reaction temperature and incrementally adding EO. A reaction temperature of from about 130 to about 220°C, preferably from about 140 to about 200°C, more preferably, from about 150 to about 180°C, is used in the invention.

Typically, the total EO content of the EO-capped polyol is from about 5 to about 35 wt. %, based on the total weight of the EO-capped polyol. After EO-capping is complete, the reaction mixture is kept at the same temperature that was used for ethoxylation or at a higher temperature in order to complete polymerization.

Acid is added to EO-capped polyols produced by this embodiment of the invention in order to neutralize the basic catalyst. Any strong or weak acid which does not form a salt which precipitates from the polyol can be used in the invention.

Typically, all Brönsted acids and combinations thereof having pkₐ - values of 14 or less under standard conditions are suitable, provided that the acids do not form salts insoluble in the EO-capped polyol. Preferably, organic acids such as sulfonic acids and their derivatives; carboxylic acids such as formic acid, acetic acid, propionic acid and benzoic acid; derivatives of carboxylic acids such as hydroxyl carbonic acid, lactic acid, mandelic acid, malic acid and tartaric acid; dicarboxylic acids such as oxalic acid, malonic acid, succinic acid, fumaric acid and phthalic acid; and amino acids and their derivatives are used in the present invention.

Preferred acids include alkylbenzene sulfonic acids; alkyltoluene sulfonic acids such as dodecylbenzene sulfonic acid and deodecyltoluene sulfonic acid; and alkylnaphthalene sulfonic acids such as butyl- or amylnaphthalene sulfonic acid.

In another embodiment of the invention, acid is added to EO-capped polyols which are produced from a mixture of a DMC-catalyzed polyol and a base-catalyzed polyol in order to neutralize the basic catalyst.

In this embodiment, a based-catalyzed polyol is added to a DMC-catalyzed polyol. The concentration of base-catalyzed polyol in the mixture is from about 0.1 to about 10 wt.%, preferably from about 0.5 to about 10 wt. %, based on the total weight of the mixture. The concentration of basic catalyst in the mixture, prior to ethoxylation, is less than 0.05 wt.%, preferably from about 0.001 to about 0.05 wt.%, more preferably, from about 0.01 to about 0.05 wt.%, based on the total weight of the mixture.

Preferably, the DMC-catalyzed polyol and the base-catalyzed polyol have the same structure.

Prior to reacting the mixture with EO, traces of water are preferably removed from the mixture to prevent carbowax formation.

Ethoxylation of the mixture is typically performed by heating the mixture to a desired reaction temperature and incrementally adding EO. A reaction temperature of from about 130 to about 220°C, preferably from about 140 to about 200°C, more preferably, from about 150 to about 180°C, is used in the invention.

Typically, the total EO content of the EO-capped polyol is from about 5 to about 35 wt. %, based on the total weight of the EO-capped polyol. After EO-capping is complete, the reaction mixture is kept at the same temperature that was used for ethoxylation or at a higher temperature in order to complete polymerization.

Acid is added to EO-capped polyols produced by this embodiment of the invention in order to neutralize the basic catalyst. Any strong or weak acid which does not form a salt which precipitates from the polyol can be used in the invention.

Typically, all Brönsted acids and combinations thereof having pkₐ - values of 14 or less under standard conditions are suitable, provided that the acids do not form salts insoluble in the EO-capped polyol. Preferably, organic acids such as sulfonic acids and their derivatives; carboxylic acids such as formic acid, acetic acid, propionic acid and benzoic acid; derivatives of carboxylic acids such as hydroxyl carbonic acid, lactic acid, mandelic acid, malic acid and tartaric acid; dicarboxylic acids such as oxalic acid, malonic acid, succinic acid, fumaric acid and phthalic acid; and amino acids and their derivatives are used in the present invention.

Preferred acids include alkylbenzene sulfonic acids; alkyltoluene sulfonic acids such as dodecylbenzene sulfonic acid and deodecyltoluene sulfonic acid; and alkylnaphthalene sulfonic acids such as butyl- or amylnaphthalene sulfonic acid.

In another embodiment of the invention, acid is added to EO-capped polyols which are produced from a mixture of DMC-catalyzed polyol and base-catalyzed polyol in order to neutralize the basic catalyst.

In this embodiment, a based-catalyzed polyol is added to a DMC-catalyzed polyol. The concentration of base-catalyzed polyol in the mixture is from about 1.0 to about 50 wt.%, preferably from about 1.0 to about 10 wt. %, based on the total weight of the mixture. The concentration of basic catalyst in the mixture, prior to ethoxylation, is from about 0.05 to about 0.5 wt.%, preferably from about 0.05 to about 0.3 wt.%, based on the total weight of the mixture.

Preferably, the DMC-catalyzed polyol and the base-catalyzed polyol have the same structure.

Prior to reacting the mixture with EO, traces of water are preferably removed from the mixture to prevent carbowax formation.

Ethoxylation of the mixture is typically performed by heating the mixture to a desired reaction temperature and incrementally adding EO. A reaction temperature of from about 130 to about 220°C, preferably from about 140 to about 200°C, more preferably, from about 150 to about 180°C, is used in the invention.

Typically, the total EO content of the EO-capped polyol is from about 5 to about 35 wt. %, based on the total weight of the EO-capped polyol. After EO-capping is complete, the reaction mixture is kept at the same temperature that was used for ethoxylation or at a higher temperature in order to complete polymerization.

Acid is added to the EO-capped polyols produced by this embodiment of the invention in order to neutralize the basic catalyst. Any strong or weak acid which does not form a salt which precipitates from the polyol can be used in the invention.

Typically, all Brönsted acids and combinations thereof having pkₐ - values of 14 or less under standard conditions are suitable, provided that the acids do not form salts insoluble in the EO-capped polyol. Preferably, organic acids such as sulfonic acids and their derivatives; carboxylic acids such as formic acid, acetic acid, propionic acid and benzoic acid; derivatives of carboxylic acids such as hydroxyl carbonic acid, lactic acid, mandelic acid, malic acid and tartaric acid; dicarboxylic acids such as oxalic acid, malonic acid, succinic acid, fumaric acid and phthalic acid; and amino acids and their derivatives are used in the present invention.

Preferred acids include alkylbenzene sulfonic acids; alkyltoluene sulfonic acids such as dodecylbenzene sulfonic acid and deodecyltoluene sulfonic acid; and alkylnaphthalene sulfonic acids such as butyl- or amylnaphthalene sulfonic acid.

Each of the processes of the present invention can occur in one reactor or in more than one reactor.

Polyols produced by the processes of the invention have a high content of primary hydroxyl groups, i.e., from about 50% to about 95%, preferably, from about 70% to about 90%. The polyols produced by the processes of the invention are useful for producing polyurethane foams, elastomers, sealants, coatings and adhesives. Additionally, the polyols produced by the processes of the invention have lower unsaturation levels than polyols produced using only basic (KOH) catalysts.

The following examples merely illustrate the invention. Those skilled in the art will recognize many variations which are within the spirit of the invention and scope of the claims.

### Example 1

### Preparation of a DMC-catalyzed polyol and EO-capping in one reactor:

### Part A

A 10 liter stirred tank reactor was charged with 305 g of a polyoxypropylene diol having an OH number of 261 mg KOH/g, 335g of a polyoxypropylene triol having an OH number of 238 mg KOH/g and 152 mg of a zinc hexacyanocobaltate catalyst. After heating the reactor content to 130°C, stripping and purging, 90 g of PO was added in order to activate the catalyst. Once the catalyst was activated, 2936 g of additional PO was added. Then a mixture of EO (253 g) and PO (1139 g), corresponding to a weight ratio of 18:82, was fed to the reactor. The reactor was allowed to cookout until no drop in pressure was noted. The reactor was cooled to room temperature and pressurized to 16 PSIA. The DMC-catalyzed polyol was mixed with 300 g of a 3200 MW diol 92.5%PO/7.5% EO and containing 1 wt. % KOH to form a mixture. The reactor was heated to 145°C, stripped and purged. 670 g of EO was then added to the mixture. After cookout, the reactor was cooled to 60 C and 15 g of DDBSA was added and mixed for 15 minutes. The reactor was drained but was not cleaned. The resulting EO-capped polyol was clear and had an OH number of 29.1 mg KOH/g, an 75.3 % primary hydroxyl content and a 15.9 wt % total EO content. The neutralized EO-capped polyol was clear.

### Part B

The reactor from Example 1, Part A, was charged with 305 g of a polyoxypropylene diol having an OH number of 261 mg KOH/ g, 335g of a polyoxypropylene triol having an OH number of 238 mg KOH/ g 149 mg of a zinc hexacyanocobaltate catalyst. After heating the reactor content to 130°C, stripping and purging, 90 g of PO was added in order to activate the catalyst. Once the catalyst was activated, 4218 g of additional PO was added. The reactor was allowed to cookout until no drop in pressure was noted. The reactor was cooled to room temperature and pressurized to 16 PSIA. The DMC-catalyzed polyol was mixed with 300 g of a 3200 MW diol 92.5%PO/7.5% EO and containing 1 wt. % KOH to form a mixture. The reactor was heated to 145°C, stripped and purged. 787 g of EO was then added to the mixture. After cookout, the reactor was cooled to 60 C and 15 g of DDBSA was added and mixed for 15 minutes. The reactor was drained but was not cleaned. The resulting EO-capped polyol was clear and had an OH number of 28.9 mg KOH/g, an 75.6 % primary hydroxyl content and a 13.1 wt % total EO content. The neutralized EO-capped polyol was clear.

### Example 2

### Preparation of a DMC-catalyzed polyol:

A 10 liter stirred tank reactor was charged with 665 g of a polyoxypropylene diol having an OH number of 261 mg KOH/ g and 169 mg of a zinc hexacyanocobaltate catalyst. After heating the reactor content to 130°C, stripping and purging, 100 g of PO was added in order to activate the catalyst. Once the catalyst was activated, 2223 g of additional PO was added. Then a mixture of EO (423 g) and PO (2178 g), corresponding to a weight ratio of 16:84, was fed to the reactor. Subsequently, a mixed block of EO (282 g)/PO (188 g) corresponding to a weight ratio of 60:40 was added. The resulting polyol was clear and had an OH number of 28.7 mg KOH/g and a 29.6% primary hydroxyl content.

### Example 3

### Preparation of an EO-capped polyol with subsequent neutralization:

A 2-gallon reactor was charged with 5100 g of the DMC-catalyzed polyol produced in Example 2. The DMC-catalyzed polyol was mixed with 250g of a 3000 MW polyoxypropylene diol having an OH number of 37.4 and containing 1 wt. % KOH to form a mixture. The reactor was heated to 145°C, stripped and purged. 611 g of EO was then added to the mixture. The resulting EO-capped polyol was clear and had an OH number of 26.8 mg KOH/g, an 80.3 % primary hydroxyl content and a 21.3 wt.% total EO content. The EO-capped polyol was then neutralized with DDBSA to a pH-value of 6. The neutralized EO-capped polyol was clear.

### Example 4

### Preparation of a DMC-catalyzed polyol:

A 2-gallon reactor was charged with 670 g of polyoxypropylene diol having an OH number of 261 mg KOH/ g and 188 mg of a zinc hexacyanocobaltate catalyst. After heating the reactor content to 130°C, stripping and purging, 100 g of PO was added in order to activate the catalyst. Once the catalyst was activated, 4066 g of additional PO was added. A mixture of EO (463 g) and PO (1785 g), corresponding to a weight ratio of 20:80, was fed to the reactor. The resulting polyol was clear and had an OH number of 33.2 mg KOH/g and a 14% primary hydroxyl content.

### Example 5

### Preparation of an EO-capped polyol:

A 2-gallon reactor was charged with 4729 g of the DMC-catalyzed polyol produced in Example 4. The DMC-catalyzed polyol was mixed with 240g of a 3000 MW polyoxypropylene diol having an OH number of 37.4 and containing 1 wt. % KOH to form a mixture. The reactor was heated to 145°C, stripped and purged. 979 g of EO was then added to the mixture. The EO-capped polyol was slightly hazy. The EO-capped polyol had an OH number of 29.2 mg KOH/g, an 84% primary hydroxyl content and a 23.2 wt. % total EO content.

### Example 6

### Preparation of a KOH-catalyzed polyol:

A 10 liter stirred tank reactor was charged with a mixture of 555 g of a polyoxypropylene triol having a hydroxyl number of 250 mg KOH/g, 825 g of a polyoxypropylene diol having a hydroxyl number of 112 mg KOH/g, and 453 g of a 45 wt.% aqueous solution of KOH. After purging and venting the reactor with nitrogen and stripping off the water, 5420 g of a mixture of PO (91.8 wt.%) and EO (8.2 wt.%) was added and reacted at 115°C. A polyol having a hydroxyl number of 111 mg KOH/g and a KOH content of 3 wt. % was obtained.

### Example 7

### Preparation of an EO-capped polyol with subsequent neutralization:

A 10 liter stirred tank reactor was charged with a mixture of 555 g of a polyoxypropylene triol having a hydroxyl number of 250 mg KOH/g, 825 g of a polyoxypropylene diol having a hydroxyl number of 112 mg KOH/g, and 0.204 g of a zinc hexacyanocobaltate catalyst. After purging and venting the reactor with nitrogen, the catalyst was activated with 83 g of PO. 5420 g of a mixture of PO (91.8 wt.%) and EO (8.2 wt.%) was then added and reacted at 130°C. Subsequently, 68 g of the KOH-catalyzed polyol produced in Example 6 was added to form a mixture, wherein the mixture comprised 0.03 wt. % KOH, based on the total weight of the mixture. The mixture was then heated to 160°C. 1284 g of EO was added to the mixture and reacted to form an EO-capped polyol. An EO-capped polyol with a hydroxyl number of 28 mg KOH/g and an 81.5% primary hydroxyl content was obtained. The EO-capped polyol was then neutralized with DDBSA.

### Example 8

### Preparation of foams:

Polyols produced as noted below were tested in foam formulations. The foams were made using a hand-mix technique familiar to those skilled in the art. A polyol formulation comprising 100 pbw of the polyol to be tested; 1.5 pbw of a cell opener such as DESMOPHEN® 41 WB01, available from Bayer AG, Leverkusen, Germany; 3.6 pbw water; 0.1 pbw blow catalyst such as DABCO BL-11, available from Air Products, Allentown, Pennsylvania; 0.33 pbw gel catalyst such as DABCO® 33LV, available from Air Products, Allentown, Pennsylvania; 0.8 pbw diethanolamine; and 0.5 pbw foam stabilizer, such as TEGOSTAB® B8715LF, available from Goldschmidt AG, Essen, Germany was pre-mixed. The polyol was mixed at 25°C with an isocyanate such as DESMODUR VP PU 3133, available from Bayer AG, Leverkusen, Germany. Free rise foams were produced to determine the reactivity (starting time, gel time, rise time). For molded foam samples, the reaction mixture was poured into a 4.2 dm³ square mold that was temperature controlled to 55°C. An amount of the reaction mixture sufficient to produce a foam pad with an overall density of 50 kg/m³ was used. The foam was removed from the mold after 240 sec. The foaming results are summarized in Table 1.
- Foam 1 (reference): Produced with a polyol comprising PO and EO, having an OH-number of 28, with catalyst (KOH) completely removed (BAYFIT® VP PU 10WF22, available from Bayer AG, Leverkusen, Germany);
- Foam 2:: produced with a polyol using the procedure of Example 7, but neutralized with lactic acid and with the polyol as produced in Example 6 comprising 50 ppm KOH;
- Foam 3:: produced with a polyol using the procedure of Example 7, but neutralized with lactic acid and with the polyol as produced in Example 6 comprising 375 ppm KOH;
- Foam 4:: produced with a polyol using the procedure of Example 7, but with the polyol as produced in Example 6 comprising 121 ppm KOH; and
- Foam 5:: produced with a polyol using the procedure of Example 7, but with the polyol as produced in Example 6 comprising 500 ppm KOH.

**Table 1**

| Foam | Starting time [s] | Gel time [s] | Rise time [s] | Free rise foam | Molded foam pad |
|---|---|---|---|---|---|
| 1* | 10 | 60 | 85 | very open - open cells | open cells, stable |
| 2 | 11.5 | 62 | 90 | very open - open cells | open cells, stable |
| 3 | 10.5 | 62 | 80 | very open-open cells | open cells, stable |
| 4 | 11 | 62 | 90 | very open - open cells | open cells, stable |
| 5 | 10 | 60 | 82 | very open - open cells | open cells, stable |

| | | | | | |
|---|---|---|---|---|---|
| **reference* | | | | | |

### Example 9:

### Effect of Salts on MDI based foams:

Example 8 showed the effect of potassium lactate (foams 2 and 3) and potassium dodecyl benzene sulphonate at levels of 500 ppm potassium or lower. There was no noticeable effect. To extend the study and determine if there is any effect at all, sodium lactate and sodium dodecyl benzene sulphonate were spiked at levels ranging from 50 to 1000 ppm potassium in a conventional polyol/MDI foam formulation. The results are illustrated in Figure 1. The results demonstrate that for MDI based foams, sodium lactate has no effect below 500 ppm sodium but has an effect on physical properties above 500 ppm sodium. For sodium dodecyl benzene suphonate, no effect was noticed even as high as 1000 ppm sodium.

## Claims

1. A process for preparing an ethylene oxide-capped polyol comprising:
a) providing a polyol which has been produced in the presence of a DMC catalyst,
b) adding a basic catalyst to the DMC-catalyzed polyol to produce a mixture comprising less than 0.05 wt. %, based on the total weight of the mixture, of the basic catalyst; and
c) ethoxylating the mixture at a temperature of from 130°C to 220°C to produce an ethylene oxide-capped polyol.

2. The process according to Claim 1, in which the double-metal cyanide catalyst is zinc hexacyanocobaltate.

3. The process according to Claim 1, in which the basic catalyst is potassium hydroxide.

4. The process according to Claim 1, in which the mixture comprise from 0.001 to 0.05 wt. %, based on the total weight of the mixture, of basic catalyst.

5. The process according to Claim 1, in which the mixture comprises from 0.01 to 0.05 wt. %, based on the total weight of the mixture, of basic catalyst.

6. The process according to Claim 1, in which the DMC-catalyzed polyol is a polyoxypropylene polyol.

7. The process according to Claim 1, in which the ethylene oxide-capped polyol is an ethylene oxide-capped polyether polyol.

8. The process according to Claim 1, in which the ethylene oxide-capped polyol is purified.

9. The process according to Claim 1 wherein the process is carried out in a single reactor.

10. The process of claim 1, additionally comprising the step of :
d) adding acid to the ethylene oxide-capped polyol;
with the proviso that no precipitate is formed by the reaction of the acid with the basic catalyst.

11. The process according to Claim 10, in which the acid is dodecylbenzene sulfonic acid.

12. The process according to Claim 10, in which the acid is lactic acid.

13. The process according to Claim 10, wherein the process is carried out in a single reactor.

14. A process for preparing an ethylene oxide-capped polyol comprising:
a) providing a polyol which has been produced in the presence of a DMC catalyst;
b) adding to the DMC-catalyzed polyol a polyol which has been produced in the presence of a basic catalyst to form a mixture comprising from 0.1 to 10 wt.%, based on the total weight of the mixture, of the base-catalyzed polyol and less than 0.05 wt.%, based on the total weight of the mixture, of the basic catalyst; and
c) ethoxylating the mixture at a temperature of from 130°C to 220°C to produce an ethylene oxide-capped polyol.

15. The process according to Claim 14, in which the double-metal cyanide catalyst is zinc hexacyanocobaltate.

16. The process according to Claim 14, in which the basic catalyst is potassium hydroxide.

17. The process according to Claim 14, in which the mixture comprises from 0.5 to 10 wt. %, based on the total weight of the mixture, of base-catalyzed polyol.

18. The process according to Claim 14, in which the mixture comprise from 0.001 to 0.05 wt. %, based on the total weight of the mixture, of basic catalyst.

19. The process according to Claim 14, in which the mixture comprises from 0.01 to 0.05 wt. %, based on the total weight of the mixture, of basic catalyst.

20. The process according to Claim 14, in which the DMC-catalyzed polyol is a polyoxypropylene polyol.

21. The process according to Claim 14, in which the base-catalyzed polyol is a polyoxypropylene polyol.

22. The process according to Claim 14, in which the ethylene oxide-capped polyol is an ethylene oxide-capped polyether polyol.

23. The process according to Claim 14, in which the ethylene oxide-capped polyol is purified.

24. The process according to Claim 14 wherein the process is carried out in a single reactor.

25. The process of claim 14, additionally comprising the step of :
d) adding acid to the ethylene oxide-capped polyol; with the proviso that no precipitate is formed by the reaction of the acid with the basic catalyst.

26. The process according to Claim 25, in which the acid is dodecylbenzene sulfonic acid.

27. The process according to Claim 26, in which the acid is lactic acid.

28. The process according to Claim 25 wherein the process is carried out in a single reactor.

29. A process for preparing an ethylene oxide-capped polyol comprising:
a) providing a polyol which was produced in the presence of a DMC catalyst;
b) adding to the DMC-catalyzed polyol a polyol which was produced in the presence of a basic catalyst to form a mixture comprising from about 1.0 to about 50 wt.%, based on the total weight of the mixture, of the base-catalyzed polyol and from about 0.05 to about 0.5 wt.%, based on the total weight of the mixture, of the basic catalyst;
c) ethoxylating the mixture at a temperature of from about 130°C to about 220°C to produce an ethylene oxide-capped polyol; and
d) adding acid to the ethylene oxide-capped polyol; with the proviso that no precipitate is formed by the reaction of the acid with the basic catalyst.

30. The process according to Claim 29, in which thedouble-metal cyanide catalyst is zinc hexacyanocobaltate.

31. The process according to Claim 29, in which the basic catalyst is potassium hydroxide.

32. The process according to Claim 29, in which the mixture comprises from about 1.0 to about 10 wt. %, based on the total weight of the mixture, of base-catalyzed polyol.

33. The process according to Claim 29, in which the mixture comprise from about .05 to about 0.3 wt. %, based on the total weight of the mixture, of basic catalyst.

34. The process according to Claim 29, in which the DMC-catalyzed polyol is a polyoxypropylene polyol.

35. The process according to Claim 29, in which the base-catalyzed polyol is polyoxypropylene polyol.

36. The process according to Claim 29, in which the ethylene oxide-capped polyol is an ethylene oxide-capped polyether polyol.

37. The process according to Claim 29, in which the acid is dodecylbenzene sulfonic acid.

38. The process according to Claim 29 wherein the process is carried out in a single reactor.

## Patentansprüche

1. Verfahren zur Herstellung eines Ethylenoxid-verkappten Polyols, umfassend:
a) das Bereitstellen eines Polyols, das in Gegenwart eines DMC-Katalysators hergestellt wurde,
b) das Zusetzen eines basischen Katalysators zum DMC-katalysierten Polyol, um ein Gemisch herzustellen, das, bezogen auf das Gesamtgewicht des Gemischs, weniger als 0,05 Gew.-% des basischen Katalysators umfasst, und
c) das Ethoxylieren des Gemischs bei einer Temperatur von 130°C bis 220 °C, um ein Ethylenoxid-verkapptes Polyol herzustellen.

2. Verfahren nach Anspruch 1, worin der Doppelmetallcyanid-Katalysator Zinkhexacyanocobaltat ist.

3. Verfahren nach Anspruch 1, worin der basische Katalysator Kaliumhydroxid ist.

4. Verfahren nach Anspruch 1, worin das Gemisch, bezogen auf das Gesamtgewicht des Gemischs, 0,001 bis 0,05 Gew.-% eines basischen Katalysators umfasst.

5. Verfahren nach Anspruch 1, worin das Gemisch, bezogen auf das Gesamtgewicht des Gemischs, 0,01 bis 0,05 Gew.-% eines basischen Katalysators umfasst.

6. Verfahren nach Anspruch 1, worin das DMC-katalysierte Polyol ein Polyoxypropylenpolyol ist.

7. Verfahren nach Anspruch 1, worin das Ethylenoxid-verkappte Polyol ein Ethylenoxid-verkapptes Polyetherpolyol ist.

8. Verfahren nach Anspruch 1, worin das Ethylenoxid-verkappte Polyol gereinigt wird.

9. Verfahren nach Anspruch 1, worin das Verfahren in einem einzelnen Reaktor durchgeführt wird.

10. Verfahren nach Anspruch 1, zusätzlich folgenden Schritt umfassend:
d) das Zusetzen von Säure zum Ethylenoxid-verkappten Polyol;
mit der Maßgabe, dass durch die Reaktion der Säure mit dem basischen Katalysator kein Niederschlag entsteht.

11. Verfahren nach Anspruch 10, worin die Säure Dodecylbenzolsulfonsäure ist.

12. Verfahren nach Anspruch 10, worin die Säure Milchsäure ist.

13. Verfahren nach Anspruch 10, worin das Verfahren in einem einzelnen Reaktor durchgeführt wird.

14. Verfahren zur Herstellung eines Ethylenoxid-verkappten Polyols, umfassend:
a) das Bereitstellen eines Polyols, das in Gegenwart eines DMC-Katalysators hergestellt wurde,
b) das Zusetzen eines Polyols, das in Gegenwart eines basischen Katalysators hergestellt wurde, zum DMC-katalysierten Polyol, um ein Gemisch herzustellen, das, bezogen auf das Gesamtgewicht des Gemischs, 0,1 bis 10 Gew.-% des basenkatalysierten Polyols und, bezogen auf das Gesamtgewicht des Gemischs, weniger als 0,05 Gew.-% des basischen Katalysators umfasst, und
c) das Ethoxylieren des Gemischs bei einer Temperatur von 130°C bis 220 °C, um ein Ethylenoxid-verkapptes Polyol herzustellen.

15. Verfahren nach Anspruch 14, worin der Doppelmetallcyanid-Katalysator Zinkhexacyanocobaltat ist.

16. Verfahren nach Anspruch 14, worin der basische Katalysator Kaliumhydroxid ist.

17. Verfahren nach Anspruch 14, worin das Gemisch, bezogen auf das Gesamtgewicht des Gemischs, 0,5 bis 10 Gew.-% eines basenkatalysierten Polyols umfasst.

18. Verfahren nach Anspruch 14, worin das Gemisch, bezogen auf das Gesamtgewicht des Gemischs, 0,001 bis 0,05 Gew.-% eines basischen Katalysators umfasst.

19. Verfahren nach Anspruch 14, worin das Gemisch, bezogen auf das Gesamtgewicht des Gemischs, 0,01 bis 0,05 Gew.-% eines basischen Katalysators umfasst.

20. Verfahren nach Anspruch 14, worin das DMC-katalysierte Polyol ein Polyoxypropylenpolyol ist.

21. Verfahren nach Anspruch 14, worin das basenkatalysierte Polyol ein Polyoxypropylenpolyol ist.

22. Verfahren nach Anspruch 14, worin das Ethylenoxid-verkappte Polyol ein Ethylenoxid-verkapptes Polyetherpolyol ist.

23. Verfahren nach Anspruch 14, worin das Ethylenoxid-verkappte Polyol gereinigt wird.

24. Verfahren nach Anspruch 14, worin das Verfahren in einem einzelnen Reaktor durchgeführt wird.

25. Verfahren nach Anspruch 14, zusätzlich folgenden Schritt umfassend:
d) das Zusetzen von Säure zum Ethylenoxid-verkappten Polyol;
mit der Maßgabe, dass durch die Reaktion der Säure mit dem basischen Katalysator kein Niederschlag entsteht.

26. Verfahren nach Anspruch 25, worin die Säure Dodecylbenzolsulfonsäure ist.

27. Verfahren nach Anspruch 26, worin die Säure Milchsäure ist.

28. Verfahren nach Anspruch 25, worin das Verfahren in einem einzelnen Reaktor durchgeführt wird.

29. Verfahren zur Herstellung eines Ethylenoxid-verkappten Polyols, umfassend:
a) das Bereitstellen eines Polyols, das in Gegenwart eines DMC-Katalysators hergestellt wurde,
b) das Zusetzen eines Polyols, das in Gegenwart eines basischen Katalysators hergestellt wurde, zum DMC-katalysierten Polyol, um ein Gemisch herzustellen, das, bezogen auf das Gesamtgewicht des Gemischs, etwa 1,0 bis etwa 50 Gew.-% des basenkatalysierten Polyols und, bezogen auf das Gesamtgewicht des Gemischs, etwa 0,05 bis etwa 0,5 Gew.-% des basischen Katalysators umfasst,
c) das Ethoxylieren des Gemischs bei einer Temperatur von etwa 130 °C bis etwa 220 °C, um ein Ethylenoxid-verkapptes Polyol herzustellen, und
d) das Zusetzen von Säure zum Ethylenoxid-verkappten Polyol;
mit der Maßgabe, dass durch die Reaktion der Säure mit dem basischen Katalysator kein Niederschlag entsteht.

30. Verfahren nach Anspruch 29, worin der Doppelmetallcyanid-Katalysator Zinkhexacyanocobaltat ist.

31. Verfahren nach Anspruch 29, worin der basische Katalysator Kaliumhydroxid ist.

32. Verfahren nach Anspruch 29, worin das Gemisch, bezogen auf das Gesamtgewicht des Gemischs, etwa 1,0 bis etwa 10 Gew.-% eines basenkatalysierten Polyols umfasst.

33. Verfahren nach Anspruch 29, worin das Gemisch, bezogen auf das Gesamtgewicht des Gemischs, etwa 0,05 bis etwa 0,3 Gew.-% eines basischen Katalysators umfasst.

34. Verfahren nach Anspruch 29, worin das DMC-katalysierte Polyol ein Polyoxypropylenpolyol ist.

35. Verfahren nach Anspruch 29, worin das basenkatalysierte Polyol Polyoxypropylenpolyol ist.

36. Verfahren nach Anspruch 29, worin das Ethylenoxid-verkappte Polyol ein Ethylenoxid-verkapptes Polyetherpolyol ist.

37. Verfahren nach Anspruch 29, worin die Säure Dodecylbenzolsulfonsäure ist.

38. Verfahren nach Anspruch 29, worin das Verfahren in einem einzelnen Reaktor durchgeführt wird.

## Revendications

1. Procédé de préparation d'un polyol coiffé par l'oxyde d'éthylène comprenant les étapes consistant à :
a) fournir un polyol qui a été produit en présence d'un catalyseur CMD;
b) ajouter un catalyseur basique au polyol catalysé par CMD pour produire un mélange comprenant moins de 0,05 % en poids, rapporté au poids total du mélange, d'un catalyseur basique ; et
c) éthoxyler le mélange à une température de 130 °C à 220 °C pour produire le polyol coiffé par l'oxyde d'éthylène.

2. Procédé selon la revendication 1, dans lequel le catalyseur cyanure métallique double est l'hexacyanocobaltate de zinc.

3. Procédé selon la revendication 1, dans lequel le catalyseur basique est l'hydroxyde de potassium.

4. Procédé selon la revendication 1, dans lequel le mélange comprend de 0,001 à 0,05 % en poids, rapporté au poids total du mélange, du catalyseur basique.

5. Procédé selon la revendication 1, dans lequel le mélange comprend de 0,01 à 0,05 % en poids, rapporté au poids total du mélange, du catalyseur basique.

6. Procédé selon la revendication 1, dans lequel le polyol catalysé par CMD est un polyol polyoxypropyléné.

7. Procédé selon la revendication 1, dans lequel le polyol coiffé par l'oxyde d'éthylène est un polyétherpolyol coiffé par l'oxyde d'éthylène.

8. Procédé selon la revendication 1, dans lequel le polyol coiffé par l'oxyde d'éthylène est purifié.

9. Procédé selon la revendication 1, dans lequel le procédé est effectué dans un réacteur unique.

10. Procédé selon la revendication 1, comprenant en outre l'étape consistant à :
d) ajouter un acide au polyol coiffé par l'oxyde d'éthylène; à condition qu'un précipité ne soit pas formé par la réaction de l'acide avec le catalyseur basique.

11. Procédé selon la revendication 10, dans lequel l'acide est l'acide dodécylbenzènesulfonique.

12. Procédé selon la revendication 10, dans lequel l'acide est l'acide lactique.

13. Procédé selon la revendication 10, dans lequel le procédé est effectué dans un réacteur unique.

14. Procédé de préparation d'un polyol coiffé par l'oxyde d'éthylène comprenant les étapes consistant à :
a) fournir un polyol qui a été produit en présence d'un catalyseur CMD;
b) ajouter au polyol catalysé par CMD un polyol qui a été produit en présence d'un catalyseur basique pour former un mélange comprenant de 0,1 à 10 % en poids, rapporté au poids total du mélange, du polyol catalysé par une base et moins de 0,05 % en poids, rapporté au poids total du mélange, du catalyseur basique ; et
c) éthoxyler le mélange à une température de 130 °C à 220 °C pour produire le polyol coiffé par l'oxyde d'éthylène.

15. Procédé selon la revendication 14, dans lequel le catalyseur cyanure métallique double est l'hexacyanocobaltate de zinc.

16. Procédé selon la revendication 14, dans lequel le catalyseur basique est l'hydroxyde de potassium.

17. Procédé selon la revendication 14, dans lequel le mélange comprend de 0,5 à 10 % en poids, rapporté au poids total du mélange, du polyol catalysé par une base.

18. Procédé selon la revendication 14, dans lequel le mélange comprend de 0,001 à 0,05 % en poids, rapporté au poids total du mélange, du catalyseur basique.

19. Procédé selon la revendication 14, dans lequel le mélange comprend de 0,01 à 0,05 % en poids, rapporté au poids total du mélange, du catalyseur basique.

20. Procédé selon la revendication 14, dans lequel le polyol catalysé par CMD est un polyol polyoxypropyléné.

21. Procédé selon la revendication 14, dans lequel le polyol catalysé par une base est un polyol polyoxypropyléné.

22. Procédé selon la revendication 14, dans lequel le polyol coiffé par l'oxyde d'éthylène est un polyétherpolyol coiffé par l'oxyde d'éthylène.

23. Procédé selon la revendication 14, dans lequel le polyol coiffé par l'oxyde d'éthylène est purifié.

24. Procédé selon la revendication 14, dans lequel le procédé est effectué dans un réacteur unique.

25. Procédé selon la revendication 14, comprenant en outre l'étape consistant à :
d) ajouter un acide au polyol coiffé par l'oxyde d'éthylène ; à condition qu'un précipité ne soit pas formé par la réaction de l'acide avec le catalyseur basique.

26. Procédé selon la revendication 25, dans lequel l'acide est l'acide dodécylbenzènesulfonique.

27. Procédé selon la revendication 26, dans lequel l'acide est l'acide lactique.

28. Procédé selon la revendication 25, dans lequel le procédé est effectué dans un réacteur unique.

29. Procédé de préparation d'un polyol coiffé par l'oxyde d'éthylène comprenant les étapes consistant à :
a) fournir un polyol qui a été produit en présence d'un catalyseur CMD;
b) ajouter au polyol catalysé par CMD un polyol qui a été produit en présence d'un catalyseur basique pour former un mélange comprenant d'environ 1,0 à environ 50 % en poids, rapporté au d'environ 0,05 à environ 0,5 % en poids, rapporté au poids total du mélange, du catalyseur basique ;
c) éthoxyler le mélange à une température d'environ 130 °C à environ 220 °C pour produire le polyol coiffé par l'oxyde d'éthylène ; et
d) ajouter un acide au polyol coiffé par l'oxyde d'éthylène ; à condition qu'un précipité ne soit pas formé par la réaction de l'acide avec le catalyseur basique.

30. Procédé selon la revendication 29, dans lequel le catalyseur cyanure métallique double est l'hexacyanocobaltate de zinc.

31. Procédé selon la revendication 29, dans lequel le catalyseur basique est l'hydroxyde de potassium.

32. Procédé selon la revendication 29, dans lequel le mélange comprend d'environ 1,0 à environ 10 % en poids, rapporté au poids total du mélange, du polyol catalysé par une base.

33. Procédé selon la revendication 29, dans lequel le mélange comprend d'environ 0,05 à environ 0,3 % en poids, rapporté au poids total du mélange, du catalyseur basique.

34. Procédé selon la revendication 29, dans lequel le polyol catalysé par CMD est un polyol polyoxypropyléné.

35. Procédé selon la revendication 29, dans lequel le polyol catalysé par une base est un polyol polyoxypropyléné.

36. Procédé selon la revendication 29, dans lequel le polyol coiffé par l'oxyde d'éthylène est un polyétherpolyol coiffé par l'oxyde d'éthylène.

37. Procédé selon la revendication 29, dans lequel l'acide est l'acide dodécylbenzènesulfonique.

38. Procédé selon la revendication 29, dans lequel le procédé est effectué dans un réacteur unique.
